(19) Europäisches Patentamt
European Patent Office
Office européen des brevets

(11) **EP 2 375 838 A1**

(12) **EUROPEAN PATENT APPLICATION**
published in accordance with Art. 153(4) EPC

(43) Date of publication:
**12.10.2011 Bulletin 2011/41**

(21) Application number: **09834793.3**

(22) Date of filing: **18.12.2009**

(51) Int Cl.:
*H04W 72/04* (2009.01)     *H04J 1/00* (2006.01)
*H04J 11/00* (2006.01)     *H04W 28/18* (2009.01)

(86) International application number:
**PCT/JP2009/071143**

(87) International publication number:
**WO 2010/073992 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.12.2008 JP 2008328576**

(71) Applicant: **NTT DOCOMO, INC.**
**Chiyoda-ku**
**Tokyo 100-6150 (JP)**

(72) Inventors:
• **OFUJI, Yoshiaki**
**Tokyo 100-6150 (JP)**
• **ISHII, Hiroyuki**
**Tokyo 100-6150 (JP)**
• **OKUBO, Naoto**
**Tokyo 100-6150 (JP)**

(74) Representative: **HOFFMANN EITLE**
**Patent- und Rechtsanwälte**
**Arabellastraße 4**
**81925 München (DE)**

(54) **WIRELESS BASE STATION AND METHOD OF CONTROL OF COMMUNICATION**

(57)    A radio base station (eNB) includes: a calculation unit (12) configured to calculate an adjusted value of reception quality information, based on an average value of the reception quality information in the at least one first resource block assigned to a mobile station (UE) in a PDSCH, and the number of resource elements assigned within the first resource blocks as one of a radio resource for a downlink common channel and a radio resource for a PDCCH; and a selection unit (13) configured to select, based on the adjusted value of the reception quality information, a modulation scheme that should be used in the PDSCH and the number of bits that can be transmitted in each of the first resource block.

FIG. 6

START

CALCULATE CQI$_{allocated}$ AND CQI offset$_{Adjusted}$ — S101

CALCULATE CQI$_{Adjusted}$ — S102

SELECT TBS AND MODULATION SCHEME — S103

TRANSMIT PREDETERMINED INFORMATION VIA DOWNLINK CHANNEL — S104

END

EP 2 375 838 A1

**Description**

**TECHNICAL FIELD**

The present invention relates to a radio base station configured to transmit to a mobile station information data by using a resource block assigned to the mobile station in a downlink shared channel, and relates also to a communication control method.

**BACKGROUND ART**

The "AMC (Adaptive Modulation and Coding) control" is known in which a modulation scheme or a channel coding rate in a downlink data channel is controlled based on reception quality information (CQI : Channel Quality Indicator) in a downlink measured at a mobile station.

In this case, in a certain modulation scheme, TBS (Transport Block Size), which is the number of bits that can be transmitted depending on a predetermined frequency resource per unit time, is determined according to a channel coding rate.

Therefore, in the AMC control of the HPDPA (High Speed Downlink Packet Access) scheme defined in the 3GPP, it is configured to control the modulation scheme and the TBS based on the CQI.

However, such AMC control has a problem that when there is a variation for each mobile station in the accuracy for measuring the CQI, it is not possible to realize a desired transmission quality even if the modulation scheme and the TBS are controlled based on the CQI.

Therefore, in order to solve the problem, in the HSDPA scheme, there is applied AMC control in which the modulation scheme and the TBS are determined by the radio base station based on an adjusted value of CQI "$CQI_{Adjusted}$" calculated by adding an offset (CQI_offset) unique to each mobile station to CQI notified from each mobile station, i.e. , an adjusted value of CQI "$CQI_{Adjusted}$" calculated by "$CQI_{Adjusted} = CQI + CQI\_offset$".

For example, there is shown that the CQI_offset is adjusted based on a reception result (ACK/NACK) in the downlink data channel notified from the mobile station, as indicated by Equation (1).

[Equation 1]

$$CQI\_offset = CQI\_offset + \Delta_{adj} \times BLER_{target}, \qquad Input = "Ack"$$
$$CQI\_offset = CQI\_offset - \Delta_{adj} \times (1 - BLER_{target}), \qquad Input = "Nack"$$
$$CQI\_offset = CQI\_offset, \qquad Input = "DTX"$$

**SUMMARY OF THE INVENTION**

**PROBLEMS TO BE SOLVED BY THE INVENTION**

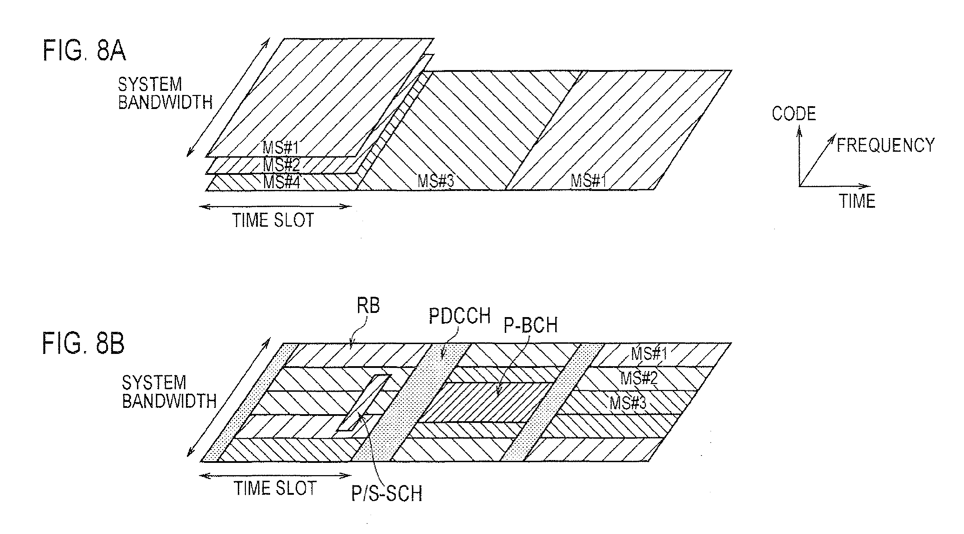

As illustrated in Fig. 8(a), the HSDPA scheme is so configured that a code resource (radio resource) for the downlink shared data channel (HS-DSCH: High Speed Downlink Shared Channel) is assigned to each mobile station MS by each time slot, and an assignment unit of the radio resource is constant.

On the other hand, as illustrated in Fig. 8(b), in the LTE (Long Term Evolution) scheme defined in the 3GPP, the radio resource for the downlink shared channel (PDSCH: Physical Downlink Shared Channel) is configured to be assigned to each mobile station MS by each time slot (sub-frame).

The radio resource in the LTE scheme is configured to be assigned to the downlink shared channel in resource block unit in which a system bandwidth is divided by each predetermined bandwidth.

Specifically, the resource block is a minimum assignment unit of a radio resource for a downlink, shared channel defined in a two-dimensional plane represented by a frequency direction and a time direction, and is configured by seven OFDM symbols in the time direction and twelve sub-carriers in the frequency direction.

It is noted that an element configuring the resource block is referred to as "resource element", and each resource block is configured by 12 × 7 resource elements.

However, in the LATE scheme, there is a resource block to which the downlink common channel is mapped, and thus, the number of resource elements that can be used for transmission of user data differs depending on each resource block.

This results in a problem that when transmission by the same modulation scheme and that of the same number of information bit (TBS) are assumed, the number of bits after channel coding differs depending on the resource block used, and therefore, it is not possible to realize a desired transmission quality (e.g., BALER).

In this case, examples of the downlink common channel include: a first synchronization channel (P-SCH: Primary-Synchronization Channel); a second synchronization channel (S-SCH: Secondary-Synchronization Channel); and a physical broadcast channel (P-BCH: Physical Broadcast Channel).

The above-mentioned P-SCH and S-SCH may be referred to as "Primary Synchronization Signals" and "Secondary Synchronization Signals", respectively.

Further, the LTE scheme has a problem that the downlink control channel (PDCCH: Physical Downlink Control Channel) is mapped to first one to three OFDM symbols of each time slot and the number of the OFDM symbols to which PDCCH is mapped varies according to the amount of the transmitted control information, and therefore, even when the same modulation scheme and TBS are selected, the number of bits after channel coding (channel coding rate) differs, as a result of which it is not possible to realize a desired transmission quality (e.g., BLER).

Therefore, the present invention is intended to overcome the above-described problem. An object of the present invention is to provide a radio base station and a communication control method, capable of realizing a desired transmission quality in a downlink data channel even when the number of bits which can be transmitted is not constant depending on the assignment unit of a radio resource for the downlink data channel.

## MEANS FOR SOLVING THE PROBLEM

A first aspect of the present invention is summarized as a radio base station configured to transmit information data to a mobile station by using at least one first resource block assigned to the mobile station in a downlink shared channel, the radio base station including: a calculation unit configured to calculate an adjusted value of reception quality information, based on the reception quality information in the at least one first resource block, and the number of resource elements assigned within the first resource blocks as one of a radio resource for a downlink common channel and a radio resource for a downlink control channel; and a selection unit configured to select, based on the adjusted value of the reception quality information, a modulation scheme that should be used in the at least one first resource block and the number of bits that can be transmitted in the at least one first resource block.

A second aspect of the present invention is summarized as a communication control method in a radio base station configured to transmit information data to a mobile station by using at least one first resource block assigned to the mobile station in a downlink shared channel, the method including: a first step of calculating an adjusted value of reception quality information, based on the reception quality information in the at least one first resource block and the number of resource elements assigned within the first resource blocks as one of a radio resource for a downlink common channel and a radio resource for a downlink control channel; and a second step of selecting, based on the adjusted value of the reception quality information, a modulation scheme that should be used in the at least one first resource block and the number of bits that can be transmitted in the at least one first resource block.

## AFFECT OF THE INVENTION

As explained above, according to the present invention, it is possible to provide a radio base station, and a communication control method, capable of realizing a desired transmission quality in a downlink data channel even when the number of resource elements that can be used is not constant depending on the assignment unit of a radio resource for the downlink data channel.

## BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a table illustrating one example of a correspondence table between "CQI" and "SIR" managed by the radio base station according to the first embodiment of the present invention.
[Fig. 4] Fig. 4 is a table illustrating one example of a correspondence table among "CQI", "TBS", and "modulation scheme" managed by the radio base station according to the first embodiment of the present invention.
[Fig. 5] Fig. 5 is a table illustrating one example of a correspondence table among "SIR", "TBS", and "modulation scheme" managed by the radio base station according to the first embodiment of the present invention.

[Fig. 6] Fig. 6 is a flowchart illustrating an operation in which the radio base station according to the first embodiment of the present invention transmits information data via a downlink channel.

[Fig. 7] Fig. 7 is a flowchart illustrating an operation in which the radio base station according to the first embodiment of the present invention calculates "CQI_offset$_{Adjusted}$".

[Fig. 8] Fig. 8 is a diagram illustrating one example of a method of assigning a radio resource to a shared data channel in the HSDPA scheme and the LTE scheme.

## BEST MODES FOR CARRYING OUT THE INVENTION

(Configuration of mobile communication system according to first embodiment of the present invention)

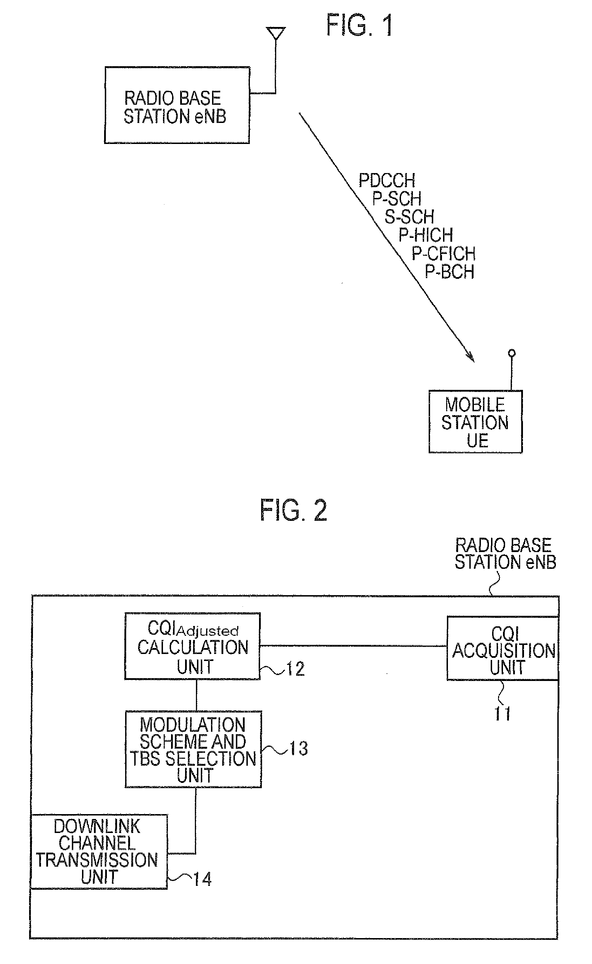

With reference to Fig. 1 to Fig. 4, the configuration of a mobile communication system according to a first embodiment of the present invention will be explained.

As illustrated in Fig. 1, the mobile communication system according to the embodiment is a mobile communication system of the LTE scheme, and includes a radio base station eNB and a mobile station UE.

In the mobile communication system according to this embodiment, as a radio access scheme, the "OFDM (Orthogonal Frequency Division Multiplexing) scheme" is applied for a downlink, and the "SC-FDMA (Single-Carrier Frequency Division Multiple Access) scheme" is applied for an uplink.

According to the OFDM scheme, a specific frequency band is divided into a plurality of sub-carriers and data is loaded on the sub-carriers and is transmitted. According to the OFDM scheme, the sub-carriers are densely arranged on the frequency axis without interference therebetween although a part of the sub-carriers overlap each other, so that high-rate transmission can be achieved and frequency use efficiency can be improved.

In the SC-FDMA scheme, a specific frequency band is divided and a transmission is made by using a frequency band different among a plurality of mobile stations UE, so that it is possible to reduce interference among the plurality of mobile stations UE.

According to the SC-FDMA scheme, because of its characteristic of small variation in transmission power, it is possible to achieve low power consumption and broad coverage of the mobile station UE.

In the mobile communication system according to this embodiment, between the radio base station eNB and the mobile station UE in the downlink, PDSCH, PDCCH, P-SCH, S-SCH, P-HICH (Physical HRAQ Indicator Channel), P-CFICH (Physical Control Format Indicator Channel), P-BCH, etc., can be set.

As illustrated in Fig. 2, the radio base station eNB includes a CQI acquisition unit 11, a GQI$_{Adjusted}$ calculation unit, a modulation scheme and TBS selection unit 13, and a downlink channel transmission unit 14.

The CQI acquisition unit 11 is configured to acquire CQI (reception quality information) in the downlink measured in each mobile station UE at a predetermined timing. For example, the CQI acquisition unit 11 may be configured to periodically acquire the CQI from each mobile station UE.

Alternately, the CQI acquisition unit 11 may be configured to non-periodically acquire the CQI from each mobile station UE. In this case, the CQI acquisition unit 11 may instruct the mobile station UE to transmit the CQI, by using UL Scheduling Grant that instructs to transmit the uplink, for example, enabling the CQI acquisition unit 11 to acquire the above-mentioned CQI transmitted non-periodically.

It is noted that a signal instructing to transmit the CQI within the above-mentioned UL Scheduling Grant may also be referred to as "CQI request". Further, the above-mentioned UE Scheduling Grant may be DCI format 0 in Downlink Control Information (DCI).

The CQI acquired by the CQI acquisition unit 11 may be CQI (Wideband CQI) of the entire system band, or may be CQI (Subband CQI) by each sub-band that is obtained by dividing the system band into several sub-bands.

The CQI$_{Adjusted}$ calculation unit 12 is configured to calculate an adjusted value of the CQI "CQI$_{Adjusted}$", based on CQI (reception quality information) "CQI$_{allocated}$" in at least one of first resource blocks assigned as a radio resource for a first PDSCH (first physical downlink shared channel) assigned to the mobile station USE and the number of resource elements assigned as a radio resource for a downlink common channel (e.g., P-SCH, S-SCH, and P-BCH) within the first resource blocks or as a radio resource for PDCCH.

It is noted that the above-mentioned CQI "CQI$_{allocated}$" may be a value of the above-mentioned Wideband CQI or Subband CQI, and may be a value obtained by averaging the value of the Wideband CQI or Subband CQI in a frequency direction.

The value obtained by averaging in the frequency direction may be a value directly averaged by the value, and may be a value obtained by averaging after being converted to a value "$10^{0.1 \times CQI}$" after which the averaged value is again converted according to an equation "$10 \times 10g_{10}(CQI)$".

The above-mentioned CQI "CQI$_{allocated}$" may be a value obtained by averaging the value of the above-mentioned Wideband CQI or Subband CQI in a time direction, or may be a value not averaged in the time direction, e.g., a value of the latest Wideband CQI or Subband CUT reported from the mobile station UE.

A calculation method 1 of the adjusted value of the CQI "$CQI_{Adjusted}$" in the first resource blocks to which the downlink common channel is mapped, a calculation method 2 of the adjusted value of the CQI "$CQI_{Adjusted}$" in the first resource blocks to which the PDCCH is mapped, and a calculation method 3 of the adjusted value of the CQI "$CQT_{Adjusted}$" in the first resource blocks to which both the downlink common channel and the PDCCH are mapped will be respectively explained, below.

Firstly, the above-described calculation method 1 will be explained. In the calculation method 1, the $CQT_{Adjusted}$ calculation unit 12 is configured to calculate the adjusted value of CQI "$CQI_{Adjusted}$" according to "$CQI_{Adjusted}$ $CQI_{allocated}$ + CQI_offset - $\Delta_{allocated}$".

In this case, the "$\Delta_{allocated}$" is a parameter calculated based on the number of resource elements assigned as the radio resource for the downlink common channel within the above-described first resource blocks.

The "CQI_offset" is an offset value that increases and decreases depending on a reception result (ACK/NACK) , in the mobile station UE, of information, data transmitted via PDSCH.

For example, the "CQI_offset" may be adjusted based on transmission acknowledgement information (ACK/ NACK/DTX) relating to PDSCH, notified from the mobile station, as represented by the following equation.

[Equation 1A]

$$CQI\_offset = CQI\_offset + \Delta_{adj} \times BLER_{target}, \quad Input = "Ack"$$
$$CQI\_offset = CQI\_offset - \Delta_{adj} \times (1 - BLER_{target}), \quad Input = "Nack"$$
$$CQI\_offset = CQI\_offset, \quad Input = "DTX"$$

In this case, the "DTX" denotes a determination result that "neither ACK nor NACK was notified from the mobile station", and this means that the mobile station makes an error in detecting PDCCH (DL Scheduling Information) for the PDSCH. In this case, the mobile station does not detect the transmission of POSH to the mobile station itself, and as a result, the mobile station will transmit neither ACK nor NACK.

Moreover, the "$\Delta_{adj}$" and the "$BLER_{target}$" are parameters for adjusting the "CQI_offset". The "$BLER_{target}$" may be an error rate of a target of the PDSCH.

Further, the "CQI_offset" may be calculated based on the priority of the information data transmitted via PDSCH, for example, the priority of a logical channel mapped to the PDSCH. For example, the "CQI_offset" may be adjusted based on Logical Channel Priority transmitted via PDSCH, as represented by the following equation.

[Equation 1B]

$$CQI\_offset = CQI\_offset - \Delta_{priority}$$

It is noted that the "$\Delta_{priority}$" is an offset value set to each Logical Channel Priority transmitted via PDSCH. For example, when DCCH is transmitted, the setting may be "priority = 1 dB"- In this case, an apparent CQI becomes small, and thus, the error rate of the PDSCH becomes small. As a result, the error rate of the DCCH can be decreased and a delay of C-plane can be decreased.

In the above description, as the priority, the Logical Channel Priority is used, however, instead thereof, QoS, "QoS Class Identifier (QCI)", or "Priority Class" may be used.

Both or only one of the adjustment of the "CQI_offset" based on the transmission acknowledgement information (ACK/NACK/DTX) relating to the above-mentioned PDSCH and the adjustment of the "CQI_offset" based on the Logical Channel Priority transmitted via PDSCH may be performed, or neither may be performed. In either case, a parameter "$\Delta_{allocated}$" described later may be calculated and a process of calculating the adjusted value of CQI "$CQI_{Adjusted}$" may be applied.

For example, the $CQI_{Adjusted}$ calculation unit 12 can calculate the parameter "$\Delta_{allocated}$" according to the following three types of calculation methods.

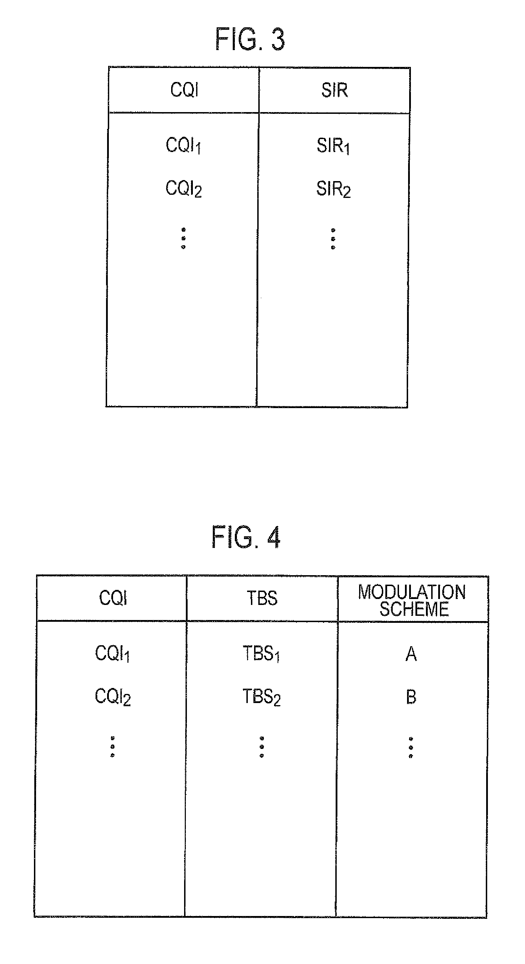

In the first calculation method, the $CQI_{Adjusted}$ calculation unit 12 may be configured to refer to a correspondence table between "CQI", and "SIR" illustrated in Fig. 3, so as to acquire a signal-to-interference ratio "$SIR_{allocated}$" corresponding to the above-described average value of the CQI "$CQI_{allocated}$", refer to the following equation of:

[Equation 2]

$$SIR_{allocated}' = SIR_{allocated} + 10 \times \log\left(\frac{N_{RE} - N_{RE,SCH/P-BCH}}{N_{RE}}\right)$$

so as to calculate an adjusted value of the signal-to-interference ratio "$SIR_{allocated}'$". And the $CQI_{Adjusted}$ calculation unit 12 may be configured to refer to a correspondence table between "CQI" and "SIR" illustrated in Fig. 3, so as to acquire an adjusted value of the average value of CQI "$CQI_{allocated}$" corresponding to an adjusted value of the signal-to-interference ratio "$SIR_{allocated}'$" and to calculate the parameter "$\Delta_{allocated}$" according to "$\Delta_{allocated} = CQI_{allocated} - CQI_{allocated}^{1}$".

More specifically, if the value of "$N_{RE}$" is "3300" and the value of "$N_{RE,SCH/P-BCH}$" is "144", the relationship between "$SIR_{allocated}'$" and "$SIR_{allocated}$" is as follows:

"$SIR_{allocated}' = SIR_{allocated} + 10 \times \log_{10}(3300-144)/3300) = SIR_{allocated} - 0.194$", where the "$N_{RE}$" denotes the number of resource elements within the above-described first resource blocks, and the "$N_{RE,SGH/P-BCH}$" denotes the number of resource elements assigned as the radio resource for the downlink common channel within the above-described first resource blocks.

It is noted that the above-mentioned resource element may also be referred to as "Resource Clement". The Resource Clement may be a radio resource configured by one sub-carrier in the frequency direction and ten EDM symbols in the time direction.

In the second calculation method, the $CQI_{Adjusted}$ calculation unit 12 may be configured to refer to the following equation of:

[Equation 3]

$$\frac{N_{RE} - N_{RE,SCH/P-BCH}}{N_{RE}} < \frac{TBS_{CQIallocated} + CQI\ offset - \Delta\ allocated}{TBS_{CQIallocated} + CQI\ offset}$$

Thereby, the maximum "$\Delta_{allocated}$" that satisfies the above-described Equation 3 can be calculate as the parameter "$\Delta_{allocated}$".

In the above equation, the "$TBS_x$" denotes TBS corresponding to an index value "x". That is, the $CQI_{Adjusted}$ calculation unit is configured to manage the value of "$TBS_x$" corresponding to each index value "x".

In the third calculation method, the $CQI_{Adjusted}$ calculation unit 12 may be configured to refer to the following equation of:

[Equation 3A]

$$\Delta_{allocated} = -\alpha \times 10 \times \log\left(\frac{N_{RE} - N_{RE,SCH/P-BCH}}{N_{RE}}\right)$$

Thereby, the parameter "$\Delta_{allocated}$" can be calculated. In the above equation, the parameter "a" is a correction parameter used when the value of SIR is converted to the value of CQI, and may be an arbitrary constant.

Secondly, the above-described calculation method 2 will be explained. In the second calculation method, the $CQI_{Adjusted}$ calculation unit 12 is configured to calculate the adjusted value of CQI "$CQI_{Adjusted}$" according to "$CQI_{Adjusted} = CQI_{allocated} + CQI\_offset - \Delta_{PDCCH\_symbol}$".

In the above equation, the "$\Delta_{PDCCH-symbol}$" is a parameter calculated based on the number of resource elements assigned as a radio resource for PDCCH within the above-described first resource blocks.

For example, the $CQI_{Adjusted}$ calculation unit 12 can calculate the parameter "$\Delta_{PDCCH\_symbol}$" according to the following two types of calculation methods.

In the second calculation method, the $CQI_{Adjusted}$ calculation unit 12 may be configured to refer to the correspondence table between "CQI" and "SIR" illustrated in Fig. 3, so as to acquire a signal-to-interference ratio "$SIR_{allocated}$" corresponding to the above-described average value of the CQI "$CQI_{allocated}$", refer to the following equation of:

[Equation 4]

$$SIR_{allocated}' = SIR_{allocated} + 10 \times \log \left( \frac{N_{RE} - N_{RE,PDCCH}}{N_{RE}} \right) ,$$

so as to calculate an adjusted value of the signal-to-interference ratio "$SIR_{allocated}'$". And, the $CQI_{Adjusted}$ calculation unit 12 may be configured to refer to the correspondence table between "CQI" and "SIR" illustrated in Fig. 3, so as to acquire an adjusted value of the average value of CQI "$CQI_{allocated}'$" corresponding to an adjusted value of the signal-to-interference ratio "$SIR_{allocated}'$" and to calculate the parameter "$\Delta_{PDCCH\_symbol}$" according to "$\Delta_{PDCCH\_symbol} = CQI_{allocated} - CQI_{allocaced}'$".

In the above equation, the "$N_{RE,PDCCH}$" denotes the number of resource elements assigned as a radio resource for PDCCH within the above-described first resource blocks.

It is noted that in the above examples, the correspondence table between "CQI" and "SIR" illustrated in Fig. 3 assumes that the number of resource elements assigned as the radio resource for PDCCH is "0"; however, if the correspondence table between "CQI" and "SIR" illustrated in Fig. 3 assumes that the number of resource elements assigned as the radio resource for PDCCH is maximum, then the calculation method therefor is shown below.

That is, if the correspondence table between "CQI" and "STR" illustrated in Fig. 3 were created on the assumption that the number of OFDM symbols for PDCCH is "3", then the abode-mentioned relationship between "$SIR_{allocated}'$" and "$SIR_{allocated}$" would be as follows:

[Equation 4A]

$$SIR_{allocated}' = SIR_{allocated} + 10 \times \log \left( \frac{N_{RE} + (N_{RE,PDCCH,max} - N_{RE,PDCCH})}{N_{RE}} \right) .$$

In the above equation, the "$N_{RE,PDCC,max}$" is the number of resource elements assigned as a radio resource for PDCCH obtained when the number of OFDM symbols for PDCCH is "3".

In the second calculation method, the $CQI_{Adjusted}$ calculation unit 12 may be configured to refer to the following equation of:

[Equation 5]

$$\frac{N_{RE} - N_{RE,PDCCH}}{N_{RE}} < \frac{TBS_{CQIallocated} + CQI\ offset - \Delta PDCCH\_symbol}{TBS_{CQIallocated} + CQI\ offset} .$$

Thereby, the maximum "$\Delta_{PDCCH\_symbol}$" that satisfies the above-described Equation 5 can be calculated as the parameter "$\Delta_{PDCCH\_symbol}$".

Thirdly, the above-described calculation method 3 will be explained. In the calculation method 3, the $CQI_{Adjusted}$ calculation unit 12 is configured to calculate the adjusted value of CQI "$CQI_{Adjusted}$" according to "$CQI_{Adjusted} = CQI_{allocated} + CQI\_offset - \Delta_{allocated\&PDCCH\_symbol}$".

In this case, the "$\Delta_{allocated\&PDCCH\_symbol}$" is a parameter calculated based on the number of resource elements assigned as the radio resource for the downlink common channel within the above-described first resource blocks and the radio resource for PDCCH.

For example, the $CQI_{Adjusted}$ calculation unit 12 can calculate a parameter "$\Delta_{allocated\&PDCCH\_symbol}$" according to the following two types of calculation methods.

In the first calculation method, the $CQI_{Adjusted}$ calculation unit 12 may be configured to refer to the correspondence table between "CQI" and "SIR" illustrated in Fig. 3, so as to acquire a signal-to-interference ratio "$SIR_{allocated}$" corresponding to the above-described average value of the CQI "$CQI_{allocated}$", refer to the following equation of:

[Equation 6]

$$SIR_{allocated}' = SIR_{allocated} + 10 \times \log\left(\frac{N_{RE} - N_{RE,SCH/P-BCH} - N_{RE,PDCCH}}{N_{RE}}\right)$$

,

so as to calculate an adjusted value of the signal-to-interference ratio "$STR_{allocated}$'". And, the $CQI_{Adjusted}$ calculation unit 12 may be configured to refer to the correspondence table between "CQI" and "SIR" illustrated in Fig. 3, so as to acquire an adjusted value of the average value or CQI "$CQI_{allocated}$'" corresponding to an adjusted value of the signal-to-interference ratio "$SIR_{allocated}$'" and to calculate the parameter "$\Delta_{allocated\&PDCCH\_symbol}$" according to "$\Delta_{allocated\&PDCCH\_symbol} = CQI_{allocated} - CQI_{allocated}$'",

In the second calculation method, the $CQI_{Adjusted}$ calculation unit 12 may be configured to refer to the following equation of:

[Equation 7]

$$\frac{N_{RE} - N_{RE,SCH/P-BCH} - N_{RE,PDCCH}}{N_{RE}} < \frac{TBS_{CQI_{allocated}} + CQI\ offset - \Delta_{allocated\&PDCCH\_symbol}}{TBS_{CQI_{allocated}} + CQI\ offset}$$

-

Thereby, the maximum "$\Delta_{allocated\&PDCcH\_symbol}$" that satisfies the above-described Equation 7 can be calculated as the parameter "$\Delta_{allocated\&PDCCH\_symbol}$".

The modulation scheme and TBS selection unit 13 is configured to select a modulation scheme that should be used in the first resource blocks and the number of bits (TBS) that can be transmitted therein, based on the adjusted value of CQI "$CQI_{Adjusted}$" calculated by the $CQI_{Adjusted}$ calculation unit 12.

For example, the modulation scheme and TBS selection unit 13 may be configured to refer to a correspondence table among "CQI", "TBS", and "modulation scheme" illustrated in Fig. 4, so as to select "TBS" and "modulation scheme" corresponding to the adjusted value of CQI "CQIAdjl2,Sted" calculated by the $CQI_{Adjusted}$ calculation unit 12, as the modulation scheme that should be used in the first resource blocks and the number of bits (TBS) that can be transmitted therein.

It is noted that the correspondence table is to be provided for each "number of first resource blocks".

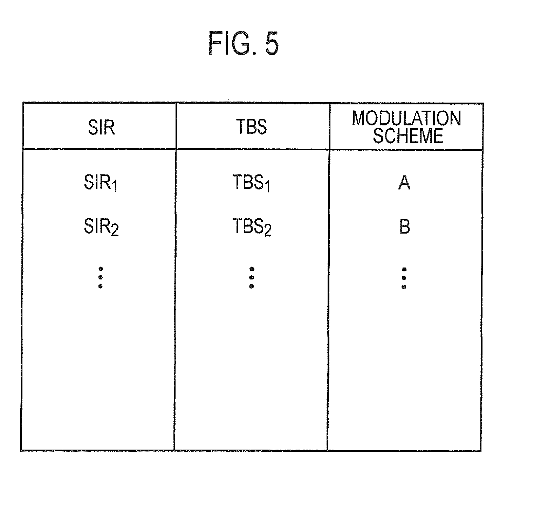

In this case, the modulation scheme and TBS selection unit 13 may be configured to refer to a correspondence table among "SIR", "TBS", and "modulation scheme" illustrated in Fig. 5, so as to select "TBS" and "modulation scheme" corresponding to the value $SIR_{Adjusted}$ obtained by converting $CQI_{Adjusted}$ to SIR, as the modulation scheme that should be used in the first resource blocks and the number of bits (TBS) that can be transmitted therein. It is noted that the conversion from $CQI_{Adjusted}$ to $SIR_{Adjusted}$ is calculated by using the correspondence table between "CQI" and "SIR" in Fig. 3, for example, according to the following equation of:

[Equation 7A]

$$SIR_{Adjusted} = \frac{SIR_{n+1} - SIR_n}{CQI_{n+1} - CQI_n} \cdot (CQI_{Adjusted} - CQI_n) + SIR_n$$

It is noted that the correspondence table also is to be provided for each "number of first resource blocks".

The downlink channel transmission unit 14 is configured to transmit the information data to the mobile station UE by using the first resource blocks using the modulation scheme and TBS selected by the modulation scheme and TBS selection unit 13.

It is noted that the information data transmitted by using the first resource blocks may be PDCCH, as a physical channel, may be DL-SCH, as a transport channel, and may be DUTCH or DCCH, as a logical channel.

(Operation of the mobile communication system according to the first embodiment of the present invention)

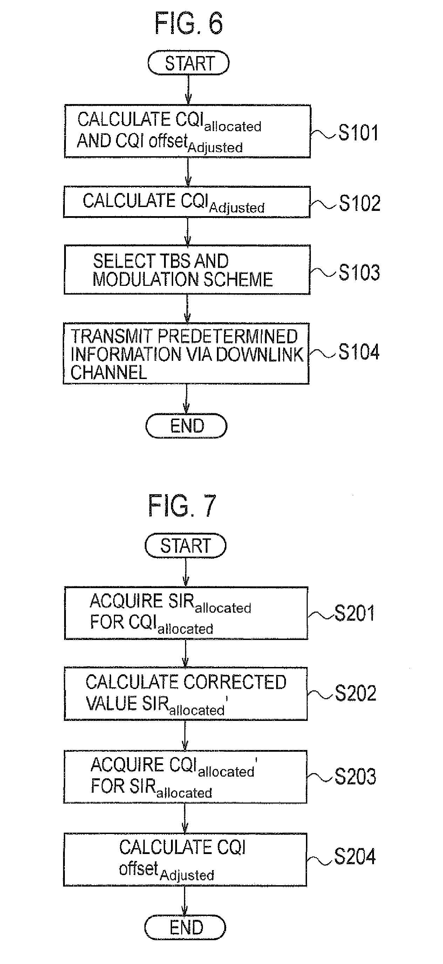

With reference to Fig. 6 and Fig. 7, an operation in which the radio base station eNB. transmits to the mobile station USE the information data (downlink data) by using the first resource blocks assigned to the mobile station USE in the mobile communication system according to the first embodiment of the present invention will be explained.

As illustrated in Fig. 6, in step S101, the radio base station eNB calculates the average value of CQI "$CQI_{allocated}$" in a plurality of first resource blocks #1 assigned to the mobile station UE in PDSCH, and the adjusted value of CQI_offset "$CQI\_offset_{Adjusted}$".

With reference to Fig. 7, one example of the method of calculating the adjusted value of CQI_offset "$CQI\_offset_{Adjusted}$" will be explained.

As illustrated in Fig. 7, in step S201, the radio base station eNB refers to the correspondence table between "CQI" and "SIR" illustrated in Fig. 3, so as to acquire the signal-to-interference ratio "$SIR_{allocated}$" corresponding to the average value of CQI "$CQI_{allocated}$".

In step S202, the radio base station eNB refers to the following equation of:

[Equation 8]

$$SIR_{allocated}{}' = SIR_{allocated} + 10 \times \log \left( \frac{N_{RE} - N_{RE,SCH/P\text{-}BCH} - N_{RE,PDCCH}}{N_{RE}} \right)$$

Thereby, the radio base station eNB calculates the adjusted value of the signal-to-interference ratio "$SIR_{allocated}{}'$".

In step S203, the radio base station eNB refers to the correspondence table between "CQI" and "SIR" illustrated in Fig. 3, so as to acquire the adjusted value of the average value of CQI "$CQI_{allocated}{}'$" corresponding to the adjusted value of the signal-to-interference ratio "$SIR_{allocated}{}'$".

In step S204, the radio base station eNB calculates the parameter "$\Delta_{allocated\&PDCCH\_symbol}$" according to "$\Delta_{allocated\&PDCCH\_symbol} = CQI_{allocated} - CQI_{allocated}{}'$", and calculates the adjusted value of CQI_offset "$CQI\_offset_{Adjusted}$" according to "$CQI\text{-}Offset_{Adjusted} = CQI\_offset - \Delta_{allocaced\&PDCCH\_symbol}$".

Returning to Fig. 6, in step S102, the radio base station eNB calculates the adjusted value of CQI "$CQI_{Adjusted}$" according to "$CQI_{Adjusted} = CQI_{allocated} + QQI\_offset_{Adjusted}$".

In step S103, the radio base station eNB refers to the correspondence table among "CQI", "TBS", and "modulation scheme" illustrated in Fig. 4, so as to select the "TBS" and "modulation scheme" corresponding to the calculated adjusted value of CQI "$CQI_{Adjusted}$", as the modulation scheme that should be used in the first resource blocks and the number of bits (TBS) that can be transmitted therein.

In step S104, the radio base station eNB transmits the information data to the mobile station UE via the first resource blocks using the selected modulation scheme and TBS.

It is noted that the radio base station eNB may be configured to perform the operation in Fig. 6 and Fig. 7 for each time slot (sub-frame).

(Operation and effect of the mobile communication system according to the first embodiment of the present invention)

According to the mobile station USE used in the mobile communication system according to the first embodiment of the present invention, even when the number of bits transmittable by each resource block is not constant, as in the LTE scheme, it is possible to realize the desired transmission quality in PDSCH.

The operation of the above-described radio base station eNB may be implemented by a hardware, may also be implemented by a software module executed by a processor, and may further be implemented by the combination of the both.

The software module may be arranged in a storing medium of an arbitrary format such as RAM (Random Access Memory), a flash memory, ROM (Read Only Memory), EPROM Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the radio base station eNB. As a discrete component, such a storing medium and processor may be arranged in the radio base station eNB.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

**Claims**

1. A radio base station configured to transmit information data to a mobile station by using at least one first resource block assigned to the mobile station in a downlink shared channel, the radio base station comprising:

   a calculation unit configured to calculates an adjusted value of reception quality information, based on the reception quality information in the at least one first resource block, and the number of resource elements assigned within the first resource blocks as one of a radio resource for a downlink common channel and a radio resource for a downlink control channel; and
   a selection unit configured to select, based on the adjusted value of the reception quality information, a modulation scheme that should be used in the at least one first resource block and the number of bits that can be transmitted in the at least one first resource block.

2. The radio base station according to claim 1, wherein the calculation unit is configured to calculate an adjusted value of the reception quality information "$CQI_{Adjusted}$" according to "$CQI_{Adjusted} = CQI_{allocated} + CQI\_Offset - \Delta_{allocated}$", when the "$CQI_{allocated}$" denotes the reception quality information in the first resource blocks, the "$\Delta_{allocated}$" denotes a parameter calculated based on the number of resource elements assigned within the first resource blocks as the radio resource for the downlink common channel, and the "$CQI\_offset$" denotes an offset value that increases and decreases depending on a reception result at the mobile station of the information data transmitted to the mobile station via the downlink shared channel.

3. The radio base station according to claim 2, wherein the calculation unit is configured to:

   acquire a signal-to-interference ratio "$SIR_{allocated}$" corresponding to the reception quality information "$CQI_{allocated}$" ;
   calculate an adjusted value of the signal-to-interference ratio "$SIR_{allocated}'$" according to the following equation of:

   [Equation A]

   $$SIR_{allocated}' = SIR_{allocated} + 10 \times \log\left(\frac{N_{RE} - N_{RE,SCH/P\text{-}BCH}}{N_{RE}}\right)$$

   when the "$N_{RE}$" denotes the number of resource elements within the first resource blocks, and the "$N_{RE,SCH/P\text{-}BCH}$" denotes the number of resource elements assigned within the first resource blocks as the radio resource for the downlink common channel;
   acquire an adjusted value of the reception quality information "$CQI_{allocated}'$" corresponding to the adjusted value of the signal-to-interference ratio "$SIR_{allocated}'$"; and
   calculate the parameter "$\Delta_{allocated}$" according to "$\Delta_{allocated} = CQI_{allocated} - CQI_{allocated}'$".

4. The radio base station according to claim 2, wherein the calculation unit is configured to calculate the maximum "$\Delta_{allocated}$" that satisfies the following Equation B as the parameter "$\Delta_{allocated}$".

   [Equation B]

   $$\frac{N_{RE} - N_{RE,SCH/P\text{-}BCH}}{N_{RE}} < \frac{TBS_{CQI_{allocated} + CQI\ offset - \Delta\ allocated}}{TBS_{CQI_{allocated} + CQI\ offset}}$$

   where the "$TBS_x$" denotes the number of bits corresponding to an index value "x", the "$N_{RE}$" denotes the number of resource elements within the first resource blocks, and the "$N_{RE,SCH/P-PCH}$" denotes the number of resource elements assigned within the first resource blocks as the radio resource for the downlink common channel.

5. The radio base station according to claim 1, wherein the calculation unit is configured to calculate the adjusted value of the reception quality information "$CQI_{Adjusted}$" according to "$CQI_{Adjusted} = CQI_{allocated} + CQI\_offset - \Delta_{PDCCH\_symbol}$" when the "$CQI_{allocated}$" denotes the reception quality information, the "$\Delta_{PDCCH-symbol}$" denotes a parameter calculated based on the number of resource elements assigned within the first resource blocks as the radio resource for the downlink control channel, and the "$CQI\_offset$" denotes an offset value that increases and decreases depending on a reception result at the mobile station of the information data transmitted by using the first resource blocks.

6. The radio base station according to claim 5, wherein
the calculation unit is configured to:

acquire a signal-to-interference ratio "$SIR_{allocated}$" corresponding to the reception quality information "$CQI_{allocated}$";
calculate an adjusted value of the signal-to-interference ratio "$SIR_{allocated}'$" according to the following Equation C:

[Equation C]

$$SIR_{allocated}' = SIR_{allocated} + 10 \times \log\left(\frac{N_{RE} - N_{RE,PDCCH}}{N_{RE}}\right)$$

,

when the "$N_{RE}$" denotes the number of resource elements within the first resource blocks, and the "$N_{RE,PDCCH}$" denotes the number of resource elements assigned within the first resource blocks as the radio resource for the downlink control channel;
acquire an adjusted value of the reception quality information "$CQI_{allocated}'$" corresponding to the adjusted value of the signal-to-interference ratio "$SIR_{allocated}'$"; and
calculate the parameter "$\Delta_{PDCCH-symbol}$" according to "$\Delta_{PDCCH\_symbol} = CQI_{allocated} - CQI_{allocated}'$"

7. The radio base station according to claim 5, wherein the calculation unit is configured to calculate the maximum "$\Delta_{PDCCH\_symbol}$" that satisfies the following Equation D as the parameter "$\Delta_{PDCCH\_symbol}$".

[Equation D]

$$\frac{N_{RE} - N_{RE,PDCCH}}{N_{RE}} < \frac{TBS_{CQI_{allocated} + CQI\_offset - \Delta_{PDCCH\_symbol}}}{TBS_{CQI_{allocated} + CQI\_offset}}$$

,

where the "$TBS_x$" denotes the number of bits corresponding to an index value "x", the "$N_{RE}$" denotes the number of resource elements within the first resource blocks, and the "$N_{RE,PDCCH}$" denotes the number of resource elements assigned within the first resource blocks as the radio resource for a downlink control channel.

8. The radio base station according to claim 1, wherein the calculation unit is configured to calculate the adjusted value of the reception quality information "$CQI_{Adjusted}$" according to "$CQI_{Adjusted} = CQI_{allocated} + CQI\_offset - \Delta_{allocated\&PDCCH\_symbol}$", when the "$CQI_{allocated}$" denotes the reception quality information, the "$\Delta_{allocated\&PDCCH\_symbol}$" denotes a parameter calculated based on the number of resource elements assigned within the first resource blocks as the radio resource for a downlink common channel and the radio resource for a downlink control channel, and the "$CQI\_offset$" denotes an offset value that increases and decreases depending on a reception result at the mobile station of the information data transmitted by using the first resource blocks.

9. The radio base station according to claim 8, wherein the calculation unit is configured to:

acquire a signal-to-interference ratio "$SIR_{allocated}$" corresponding to the reception quality information "$CQI_{allocated}$";
calculate an adjusted value of the signal-to-interference ratio "$SIR_{allocated}$" according to the following Equation E:

[Equation E]

$$SIR_{allocated}' = SIR_{allocated} + 10 \times \log\left(\frac{N_{RE} - N_{RE,SGH/P\text{-}BCH} - N_{RE,PDCCH}}{N_{RE}}\right)$$

,

when the "$N_{RE}$" denotes the number of resource elements within the first resource block, the "$N_{RE,SGH/P\text{-}BCH}$" denotes the number of resource elements assigned within the first resource blocks as the radio resource for the downlink common channel, and the "$N_{RE,PDCCH}$" denotes the number of resource elements assigned within the first resource blocks as the radio resource for the downlink control channel;
acquire an adjusted value of the reception quality information "$CQI_{allocated}'$" corresponding to the adjusted value of the signal-to-interference ratio "$SIR_{allocated}'$"; and
calculate the parameter "$\Delta_{allocated\&PDCCH\_symbol}$" according to "$\Delta_{allocated\&PDCCH\_symbol} = CQI_{allocated} - CQI_{allocated}'$".

**10.** The radio base station according to claim 8, wherein the calculation unit is configured to calculate the maximum "$\Delta_{allocated\&PDCCH\_symbol}$" that satisfies the following Equation F as the parameter "$\Delta_{allocated\&PDCCH\_syznbol}$".

[Equation F]

$$\frac{N_{RE} - N_{RE,SGH/P\text{-}BCH} - N_{RE,PDCCH}}{N_{RE}} < \frac{TBS_{CQIallocated} + CQI\ offset - \Delta\ allocated\&PDCCH\_symbol}{TBS_{CQIallocated} + CQI\ offset}$$

,

where the "$TBS_{x}$" denotes the number of bits corresponding to an index value "x", the "$N_{RE}$" denotes the number of resource elements within the first resource blocks, the "$N_{RE,SGH/P\text{-}BCH}$" denotes the number of resource elements assigned within the first resource blocks as the radio resource for the downlink common channel, and the "$N_{RE,PDCCH}$" denotes the number of resource elements assigned within the first resource blocks as the radio resource for a downlink control channel.

**11.** A communication control method in a radio base station configured to transmit information data to a mobile station by using at least one first resource block assigned to the mobile station in a downlink shared channel, the method comprising:

a first step of calculating an adjusted value of reception quality information, based on the reception quality information in the at least one first resource block and the number of resource elements assigned within the first resource blocks as one of a radio resource for a downlink common channel and a radio resource for a downlink control channel; and
a second step of selecting, based on the adjusted value of the reception quality information, a modulation scheme that should be used in the at least one first resource block and the number of bits that can be transmitted in the at least one first resource block.

# FIG. 1

RADIO BASE
STATION eNB

PDCCH
P-SCH
S-SCH
P-HICH
P-CFICH
P-BCH

MOBILE
STATION
UE

# FIG. 2

RADIO BASE
STATION eNB

$CQI_{Adjusted}$
CALCULATION
UNIT ~12

CQI
ACQUISITION
UNIT ~11

MODULATION
SCHEME AND
TBS SELECTION
UNIT ~13

DOWNLINK
CHANNEL
TRANSMISSION
UNIT ~14

## FIG. 3

| CQI | SIR |
|---|---|
| $CQI_1$ | $SIR_1$ |
| $CQI_2$ | $SIR_2$ |
| ⋮ | ⋮ |

## FIG. 4

| CQI | TBS | MODULATION SCHEME |
|---|---|---|
| $CQI_1$ | $TBS_1$ | A |
| $CQI_2$ | $TBS_2$ | B |
| ⋮ | ⋮ | ⋮ |

# FIG. 5

| SIR | TBS | MODULATION SCHEME |
|:---:|:---:|:---:|
| $SIR_1$ | $TBS_1$ | A |
| $SIR_2$ | $TBS_2$ | B |
| ⋮ | ⋮ | ⋮ |

# FIG. 6

START

CALCULATE CQI$_{allocated}$ AND CQI offset$_{Adjusted}$ — S101

CALCULATE CQI$_{Adjusted}$ — S102

SELECT TBS AND MODULATION SCHEME — S103

TRANSMIT PREDETERMINED INFORMATION VIA DOWNLINK CHANNEL — S104

END

# FIG. 7

START

ACQUIRE SIR$_{allocated}$ FOR CQI$_{allocated}$ — S201

CALCULATE CORRECTED VALUE SIR$_{allocated}$' — S202

ACQUIRE CQI$_{allocated}$' FOR SIR$_{allocated}$ — S203

CALCULATE CQI offset$_{Adjusted}$ — S204

END

FIG. 8A

SYSTEM
BANDWIDTH

MS#1
MS#2
MS#4

MS#3

MS#1

TIME SLOT

CODE

FREQUENCY

TIME

FIG. 8B

RB    PDCCH    P-BCH

SYSTEM
BANDWIDTH

MS#1
MS#2
MS#3

TIME SLOT

P/S-SCH

EP 2 375 838 A1

## INTERNATIONAL SEARCH REPORT

| | International application No. |
|---|---|
| | PCT/JP2009/071143 |

A. CLASSIFICATION OF SUBJECT MATTER
*H04W72/04*(2009.01)i, *H04J1/00*(2006.01)i, *H04J11/00*(2006.01)i, *H04W28/18*
(2009.01)i

According to International Patent Classification (IPC) or to both national classification and IPC

B. FIELDS SEARCHED

Minimum documentation searched (classification system followed by classification symbols)
H04W72/04, H04J1/00, H04J11/00, H04W28/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-186969 A (Matsushita Electric Industrial Co., Ltd.), 02 July 2004 (02.07.2004), paragraphs [0044] to [0125] (Family: none) | 1-11 |
| A | Zhonghao Zhang, et.al., "A CQI Adjustment Scheme for HSDPA System", Vehicular Technology Conference, 2008. VTC Spring 2008. IEEE, 2008. 05, pp.1433-1437 | 1-11 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 March, 2010 (09.03.10) | 23 March, 2010 (23.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)